Europäisches Patentamt

(19) European Patent Office

Office européen des brevets

(11) Numéro de publication: **0 021 901**
**B1**

(12) **FASCICULE DE BREVET EUROPEEN**

(45) Date de publication du fascicule du brevet: **21.09.83**

(51) Int. Cl.³: **B 64 C 27/35**

(21) Numéro de dépôt: **80400777.1**

(22) Date de dépôt: **02.06.80**

(54) Rotor de giravion à moyeu articulé compact.

(30) Priorité: **05.06.79 FR 7914297**

(43) Date de publication de la demande:
**07.01.81 Bulletin 81/1**

(45) Mention de la délivrance du brevet:
**21.09.83 Bulletin 83/38**

(84) Etats contractants désignés:
**DE GB IT**

(56) Documents cités:
**DE - A - 2 210 767**
**FR - A - 1 475 326**
**FR - A - 2 373 445**
**US - A - 3 790 302**

(73) Titulaire: **SOCIETE NATIONALE INDUSTRIELLE AEROSPATIALE**
**37 boulevard de Montmorency**
**F-75016 Paris Cedex 16 (FR)**

(72) Inventeur: **Aubry, Jacques Antoine**
**Domaine du Lac Bleu 2 avenue Marie Gasquet**
**F-13480 Cabries Bouches-du-Rhône (FR)**

(74) Mandataire: **Casanova, André et al,**
**CABINET ARMENGAUD JEUNE CASANOVA,**
**AKERMAN, LEPEUDRY 23 boulevard de**
**Strasbourg**
**F-75010 Paris (FR)**

Courier Press, Leamington Spa, England.

Rotor de giravion à moyeu articulé compact.

La présente invention concerne un rotor de giravion, comportant un moyeu articulé particulièrement compact.

La demande FR—A—2 228 663, ainsi que son premier certificat d'addition FR—E—2 263 151, décrivent un rotor de giravion, dont le moyeu est réuni à chaque pale par l'intermédiaire d'une chape, enserrant le pied de la pale, et d'une butée lamifiée sphérique, fixée vers son centre à au moins un bras radial dudit moyeu, et prenant appui, du côté de sa convexité, contre l'extrémité intérieure de la chape. Dans la forme de réalisation décrite dans le premier certificat d'addition, qui vient d'être mentionné, la chape est elle-même formée essentiellement par deux plaques rigides, enserrant le pied de la pale correspondante. Par ailleurs, le moyeu de ce rotor de giravion connu est en forme d'étoile, et il comporte, pour chaque pale du rotor, un bras de liaison, aplati dans le plan de l'étoile et flexible dans le sens perpendiculaire audit plan; la butée lamifiée sphérique est comprimée entre les extrémités des plaques de la chape et le bord extérieur d'une ouverture, ménagée dans le moyeu, à la base du bras correspondant; d'autre part, l'extrémité de chaque bras du moyeu est en coopération coulissante et tournante avec le fond de la chape. Dans la forme de réalisation décrite dans le premier certificat d'addition mentionné, les deux plaques parallèles rigides, qui constituent essentiellement la chape, emprisonnent une rotule coulissante pour l'extrémite du bras correspondant du moyeu, avec interposition de deux plaques d'une matière visco-élastique, constituant un adaptateur de fréquence. Un levier de commande du pas de la pale, sensiblement parallèle aux plaques rigides de la chape correspondante, a une extrémité extérieure fixée au fond de ladite chape, et une extrémité intérieure, située sensiblement dans le plan perpendiculaire à l'axe de la pale et passant par le centre de la butée sphérique. Comme cette dernière se trouve sensiblement au niveau du bord extérieur de l'ouverture ménagée dans le moyeu, à la base du bras correspondant, la biellette qui accouple ladite extrémité intérieure du levier de commande du pas, associé à la pale considérée, avec le plateau cyclique de commande du pas, se trouve nécessairement à une distance relativement importante du mât du rotor.

La présente invention permet de réaliser un rotor de giravion, analogue au rotor connu qui vient d'être mentionné, mais qui comporte un moyeu beaucoup plus compact, permettant ainsi d'adapter éventuellement sur ledit moyeu et entre celui-ci et le fuselage, des carénages, présentant de faibles maîtres-couples, même dans le cas où le second carénage est dimensionné pour envelopper certains organes au moins du dispositif de commande du pas du rotor, notamment le plateau cyclique et les biellettes qui lui sont accouplées.

Le rotor de giravion selon la présente invention comporte également un moyeu réuni à chaque pale par l'intermédiaire d'une chape, formée essentiellement par deux plaques rigides, enserrant le pied de la pale, et d'une butée lamifiée sphérique, fixée vers son centre à au moins un bras radial, dudit moyeu, et prenant appui, du côté de sa convexité, contre l'extrémité intérieure de la chape, le pas de chaque pale étant commandé par un organe de commande relié à une biellette de commande du pas par l'intermédiaire d'une organe de liaison; le rotor selon la présente invention est caractérisé en ce qu'il comprend, pour chaque pale, un amortisseur visco-élastique constitué par une empilement alterné d'au moins deux flasques métalliques et d'au moins une couche fixée aux flasques par vulcanisation ou collage, d'un matériau visco-élastique à grande raideur et à rémanence élévée pour les déformations, qui est disposé entre la chape correspondante et l'organe de commande du pas correspondant, lequel est, d'une part, monté pivotant par au moins une partie radiale externe sur la chape par l'intermédiaire dudit amortisseur et d'autre part, monté coulissant et pivotant autour de l'axe longitudinal de la pale correspondante à l'interieur ou à proximité immédiate du corps de moyeu, par une partie radiale interne qui est solidaire de l'organe de liaison très proche du corps de moyeu, la direction du coulissement étant celle de l'axe longitudinal de la pale correspondante et perpendiculaire à l'axe de pivotement de l'organe de commande du pas sur la chape.

Grâce à cette disposition selon la présente invention, l'amortisseur visco-élastique, en forme de couronne, peut être rapproché de la butée sphérique, si bien qu'il n'est plus nécessaire de prolonger le bras du moyeu du rotor très au-delà du centre de ladite butée sphérique, ni de prévoir par suite une coopération coulissante et tournante de l'extrémité de chaque bras du moyeu avec le fond de la chape. La longueur radiale de cette dernière, et notamment des plaques rigides qui la constituent essentiellement, peut être considérablement réduite. Par suite, il n'est plus nécessaire de prévoir un levier de commande du pas, sensiblement parallèle auxdites plaques rigides de la chape; le dispositif de commande du pas de chaque pale peut au contraire attaquer directement la chape, par l'intermédiaire de l'amortisseur visco-élastique, sensiblement au niveau du centre de la butée sphérique, si bien que les différents organes du dispositif de commande du pas, et notamment les biellettes accouplées avec le plateau cyclique, peuvent être considérablement rapprochés du mât du rotor. Le moyeu du rotor selon la présente invention offre donc un encombrement radial très réduit, ce qui entraîne une réduction importante de la traînée dudit moyeu, et par suite, à vitesse égale du giravion, une réduction de consommation d'énergie, ainsi qu'une possibilité d'accroissement de sa vitesse limite. Le faible encombrement du moyeu facilite son carénage éventuel. Enfin, dans le cas où un carénage est prévu entre le fuselage du giravion et le moyeu de son rotor, ledit carénage peut être aménage de façon à envelopper également le plateau cyclique de commande du pas et les biellettes qui lui sont accouplées, dans la mesure notamment où ces dernières peuvent être disposées à proximité immédiate du mât du rotor. La présente invention permet d'utiliser à cet effet un carénage à faible maître-couple, qui, en plus des avantages, précédemment mentionnés, résultant de la réduction de la traînée du rotor, évite la formation de tourbillons, susceptibles de perturber le fonctionnement aérodynamique du rotor arrière du giravion et l'alimentation des entrées d'air de son moteur, lorsque celles-ci sont disposées juste derrière le mât du rotor.

Dans une forme de réalisation préférée du rotor de giravion selon la présente invention, l'amortisseur visco-élastique, en forme de couronne plate, est inséré entre les deux plaques rigides de la chape, de manière à entourer la butée lamifiée sphérique et de telle sorte que le centre de ladite butée sphérique et celui de ladite couronne plate soient pratiquement confondus; des paliers d'articulation, solidaires de l'amortisseur visco-élastique, sont insérés entre la chape associée à chaque pale et l'organe de commande du pas de la pale correspondante; l'organe de commande du pas lui-même peut avoir la forme d'un étrier, dont les deux branches sont montées respectivement pivotantes dans les deux paliers d'articulation de la chape correspondante; de préférence, les axes des paliers d'articulation d'une même chape sont alignés et passent par le centre de la butée sphérique correspondante; la partie de l'étrier, qui est située près du corps du moyeu, peut être alors munie, en son milieu, d'un appendice, monté à rotule coulissante à l'intérieur, ou à proximité immédiate dudit corpos du moyeu, ainsi que, d'un côté, de l'organe de liaison, relié à la biellette de commande, de préférence sensiblement parallèle à l'axe du moyeu, et pouvant être ainsi disposée à proximité immédiate du mât du rotor.

Le rotor pour giravion selon la présente invention est enfin susceptible d'une forme de réalisation particulièrement avantageuse, à pales repliables; dans cette forme de réalisation, le pied de chaque pale est réuni à la chape correspondante par deux broches dont une amovible, et un logement est aménagé dans ladite chape pour y insérer ladite broche amovible, afin d'immobiliser la butée sphérique par rapport à la chape lors du repliement de la pale vers l'arrière du giravion, par pivotement de ladite pale autour de la broche inamovible, correspondante.

A titre d'exemples, on a décrit ci-dessous et illustré schématiquement au dessin annexé une forme de réalisation d'un rotor d'hélicoptère selon la présente invention.

Les figures 1, 2 et 3 sont respectivement des vues en élévation, de face, et en plan d'un hélicoptère équipé d'un rotor principal selon la présente invention.

La figure 4 est une vue partielle de la partie supérieure du mât du rotor de l'hélicoptère des figures 1 à 3, et de son moyeu, en coupe par un plan axial passant par le pied d'une pale.

La figure 5 est une vue en coupe suivant la ligne V—V de la figure 4.

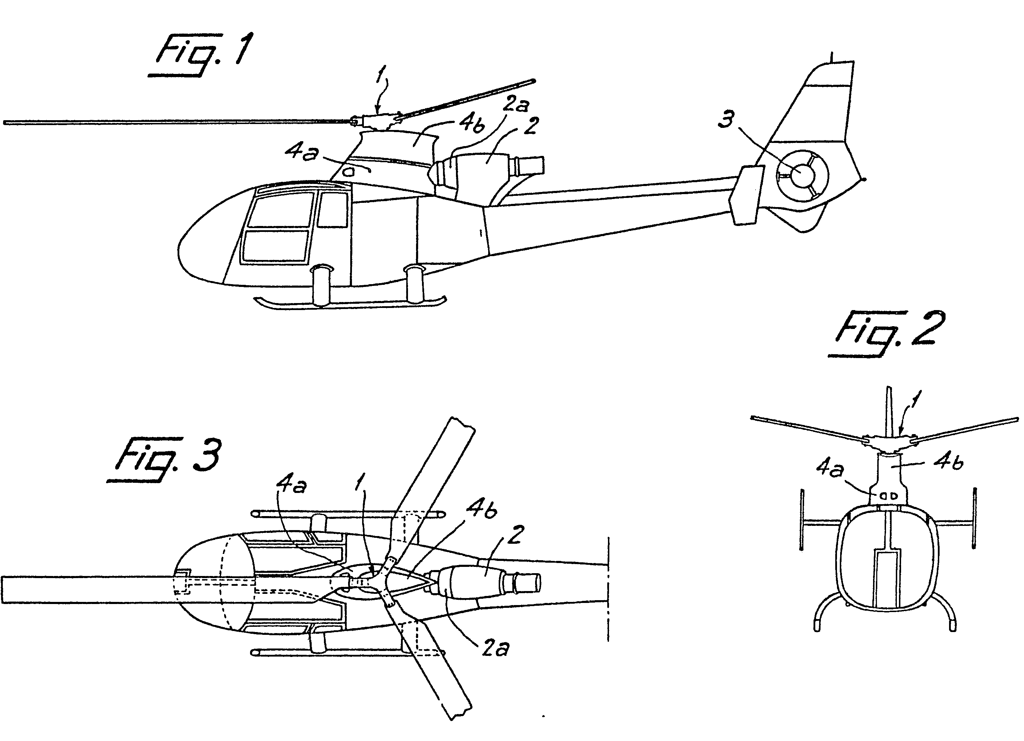

La figure 1 représenté un hélicoptère, muni d'un rotor principal, tripale, selon la présente invention, dont le moyeu est désigné par 1; 2 désigne la turbine carénée, destinée à l'entraînement du rotor principal, de moyeu 1, ainsi que d'un rotor arrière, 3. La turbine 2 et son carénage sont supportés par la partie arrière de la cabine, de même qu'un carénage en deux parties superposées; la partie inférieure, 4a, de ce carénage, entoure la boîte de transmission qui est insérées entre l'arbre de sortie de la turbine d'une part, et, d'autre part, le mât (non représenté) du rotor principal et l'arbre (également non représenté) servant à la transmission du mouvement au rotor arrière 3; la partie supérieure, 4b, de ce carénage s'étend jusqu'à une faible distance en dessous du moyeu 1 du rotor principal; ce carénage supérieur entoure complètement la partie supérieure du mât du rotor principal, ainsi que le dispositif de commande du pas, non représentés. Ce carénage double, 4a, 4b présente cependant une faible traînée aérodynamique, en raison, d'une part, de son maître-couple réduit (figure 2), et d'autre part, de son profil, aérodynamique (figure 3). Comme on l'a déjà indiqué, la faible traînée du carénage 4a—4b a pour effet de réduire la consommation énergétique de l'hélicoptère, à vitesse égale, ou d'accroître sa vitesse limite; d'autre part, grâce notamment à sa forme aérodynamique visible sur la figure 3, le carénage, 4a—4b, réduit le phénomène de sillage, c'est-à-dire l'importance des tourbillons formés derrière ledit carénage, la réduction de ces tourbillons favorisant le fonctionnement aérodynamique du rotor arrière, 3, et l'alimentation de la prise d'air, 2a, située à l'avant de la turbine carénée 2.

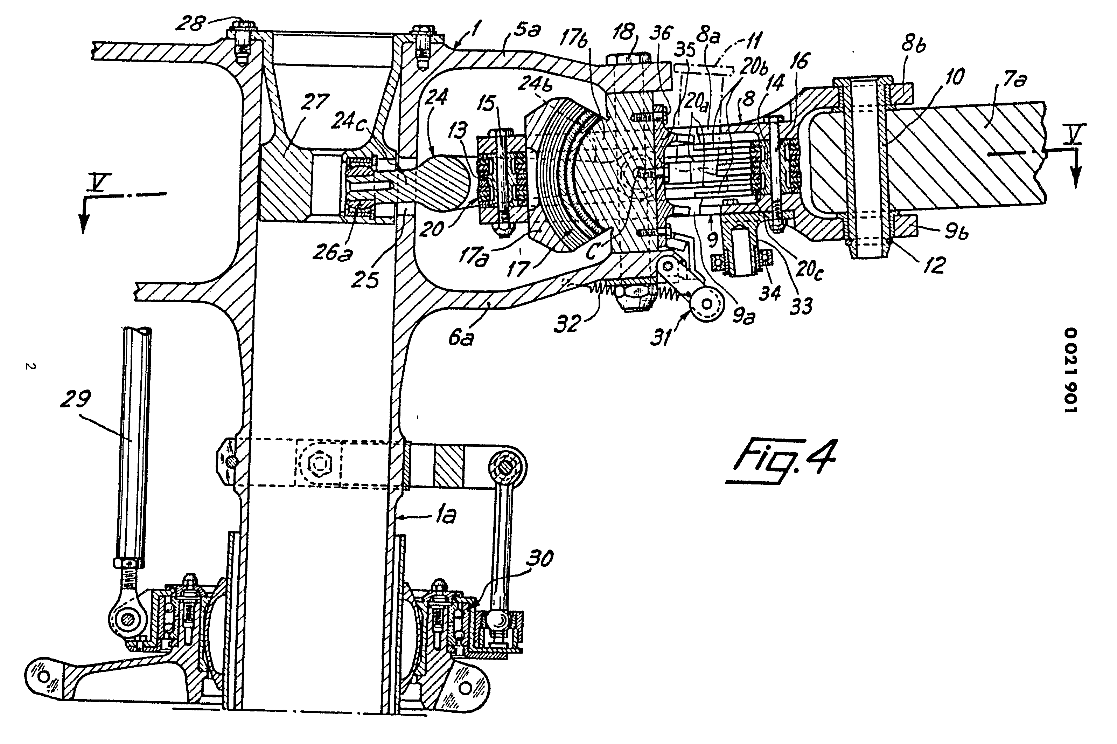

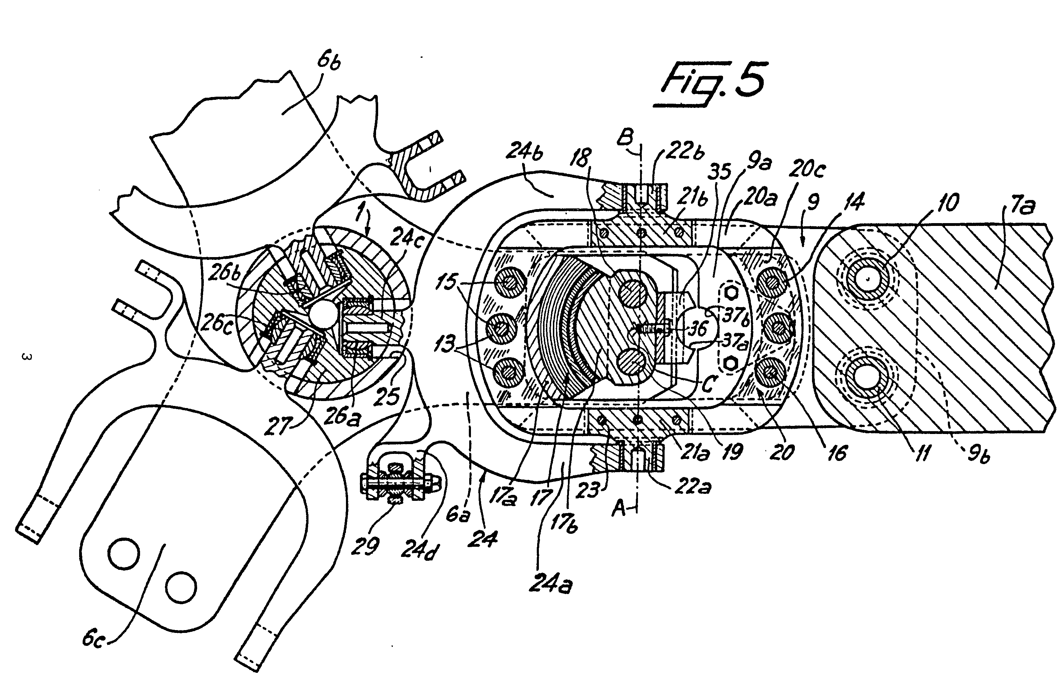

Dans la forme de réalisation illustrée en détail sur les figures 4 et 5, le moyeu 1, du rotor est constitué essentiellement par l'extrémité supérieure du mât tubulaire, 1a, réalisé en acier ou en titane. Le moyeu, 1, de ce rotor tripale comporte d'autre part trois paires de bras radiaux superposés; la figure 4 montre notamment la paire de bras radiaux superposés, 5a, 6a, correspondant à la pale 7a; sur la figure 5, on peut seulement voir les trois bras radiaux inférieurs 6a, 6b et 6c. Chacun des bras radiaux tels que 5a et 6a est de préférence solidaire du moyeu 1, avec lequel il est par exemple venu de forgeage, et il présente une courte longueur radiale, par exemple d'environ 1,5 fois le diamètre extérieur du mât 1a du rotor. Chaque paire de bras radiaux telle que 5a—6a, est réunie au pied, 7a, de la pale correspondante, par l'intermédiaire d'une chape, formée essentiellement par deux plaques rigides, 8 et 9, de préférence métalliques, chacune de ces plaques rigides 8 et 9, sensiblement rectangulaire, présente une large ouverture, 8a ou 9a, et les deux plaques sont assemblées entre elles, d'une façon qui va être décrite ultérieurement, de manière que leurs extrémités forment une sorte de fourche 8b—9b (figure 4), enserrant le pied, 7a, de la pale; dans la forme de réalisation considérée, le pied 7a, de la pale est assujetti à la fourche, 8b—9b, par deux broches, 10 et 11, qui traversent des perçages coïncidents des éléments 7a, 8b et 9b; la broche, 10, par exemple, est rendue inamovible par un jonc, 12, ou un écrou, tandis que la broche 11 est immobilisée de façon amovible par des moyens appropriés, par exemple par une agrafe métallique (non représentée). Les parties échancrées des deux plaques rigides, 8 et 9, sont maintenues écartées l'une de l'autre par des pièces d'écartement, sensiblement tubulaires, 13 et 14, que traversent des boulons d'assemblage 15 et 16. Une butée sphérique, 17, de préférence une butée lamifiée d'un type connu, formée d'un empilement alterné de lames de métal rigides et d'élastomère, en forme de calottes sphériques, assemblées par vulcanisation, est engagée dans les ouvertures, 8a et 9a, des plaques rigides, 8 et 9, de la chape, du côté de son extrémité la plus proche du moyeu 1, du rotor. Cette butée sphérique, 17, est encastrée entre deux armatures rigides, de préférence métalliques; l'armature, 17a qui correspond à la convexité de la butée sphérique 17, prend elle-même appui, par des surfaces adaptées, contre les bords correspondants des ouvertures, 8a et 9a, des plaques, 8 et 9, comme visible sur la figure 4. Quant à l'armature 17b, montée dans la concavité de la butée sphérique 17, elle est prolongée, vers le centre géométrique, C, de la butée sphérique 17, par un élément dont la hauteur correspond pratiquement à l'écartement des faces en regard des extrémités des deux bras radiaux, 5a et 6a, du moyeu 1; cet élément de l'armature 17b est traversé à peu près verticalement par deux perçages parallèles, que traversent deux boulons, 18 et 19, servant à la fixation de l'ensemble de la butée sphérique, 17, et de ses armatures, notamment 17b, aux extrémités des bras radiaux 5a et 6a.

Dans cette forme de réalisation de l'invention, un amortisseur visco-élastique, en forme de couronne plate, dont l'ensemble a été désigné par 20, est inséré entre les deux plaques rigides, 8 et 9, de la chape, de manière à suivre les bords de leurs ouvertures respectives, 8a et 9a, et à entourer ainsi la butée sphérique 17. Cet amortisseur visco-élastique est formé essentiellement par un empilement alterné de flasques métalliques tesl que 20a, 20b et de couches telles que 20c d'élastomère, à grande raideur et à rémanence élevée, l'ensemble des flasques et des couches étant assemblé par vulcanisation ou collage. Les éléments 20a, 20b et 20c de l'empilement alterné sont enfilés, par des perçages appropriés, sur des pièces d'écartement 13 et 14, de sorte que des boulons d'assemblage 15 et 16 de la chape 8—9 servant aussi à la fixation de l'amortisseur en forme de couronne plate entre les plaques 8 et 9 de ladite chape. Les pièces d'écartement 13 et 14, de forme sensiblement cylindrique, comportent des évidements annulaires appropriés de façon à immobiliser les flasques 20b, mais à laisser un jeu suffisant pour permettre des mouvements relatifs des flasques 20a.

D'autre part, des blocs métalliques 21a et 21b, portant latéralement des tourillons cylindriques, 22a et 22b, sont insérés entre les éléments métalliques, 20a, en forme de couronnes plates, de l'amortisseur visco-élastique 20, vers le milieu des grands côtés des ouvertures, 8a et 9a, des plaques 8 et 9. Ces blocs métalliques sont fixés, par exemple par des vis 23, aux éléments 20a, de manière que les tourillons cylindriques, 22a et 22b, fassent saillie sur les côtés de l'amortisseur visco-élastique. L'ensemble est disposé de telle façon que les axes A et B des tourillons, 22a et 22b, soient alignés et passent exactement par le centre géométrique C de la butée sphérique 17.

Dans la forme de réalisation considérée, les tourillons, 22a et 22b, servent de paliers d'articulation, solidaires de l'amortisseur visco-élastique, 20, pour les deux branches, 24a et 24b, d'une organe en forme d'étrier, 24, du dispositif de commande du pas de la pale 7a. La partie de l'organe 24 en forme d'étrier, qui est située près du corps du moyeu 1 du rotor, est munie, en son milieu, d'un appendice, 24c, qui traverse la paroi du moyeu tubulaire 1, par un orifice approprié, 25, et dont l'extrémité est montée coulissante dans une roture 26a; les trois rotules telles que 26a, correspondant respectivement aux étriers associés aux trois pales, telles que 7a, du rotor, sont elles-mêmes logées dans une pièce, 27, engagée dans l'ouverture supérieure du moyeu tubulaire 1, à l'extrémité supérieure duquel ladite pièce, 27, est fixée, par exemple par des vis 28. Chaque pièce en forme d'étrier telle que 24 est en outre munie, d'un côté, d'un organe de liaison, 24d, également très proche du corps du moyeu 1, pour une biellette (telle que 29 sur la figure 4) de commande du pas de la pale correspondante. La figure 5 montre une forme de réalisation bien connue de l'articulation entre l'extrémité supérieure de la biellette, 29, et l'organe de liaison 24d. En raison de la grande proximité des organes de liaison tels que 24d avec le corps 1, du moyeu, les biellettes de commande du pas, telles que 29, qui sont sensiblement parallèles à l'axe du rotor, peuvent être ainsi disposées à proximité immédiate du mât 1*a* du rotor. Comme visible à la partie inférieure de la figure 4, le plateau cyclique tournant 30, avec lequel sont accouplées les extrémités inférieures des différentes biellettes, 29, peut également présenter un diamètre extérieur peu supérieur à celui du mât 1*a* du rotor. Pour ces différents motifs, la partie supérieure, 4*b*, du carénage (figures 1 à 3) peut envelopper complètement les différentes biellettes de commande du pas, 29, ainsi que le plateau cyclique, 30, sans qu'il soit nécessaire pour autant de lui donner des dimensions transversales très importantes, d'où résultent les avantages qui ont été précédemment mentionnés.

Une butée inférieure, 31, est montée pivotante à l'extrémité du bras radial inférieur, 6*a*, un ressort, 32, la maintenant en position abaissée lorsque le rotor est au repos ou tourne à très faible vitesse; dans ce cas, un appendice 33, qui est fixé en dessous de la plaque inférieure 9 de la chape, et qui est de préférence muni à son extrémité inférieure d'un roulement à billes, 34, vient au contact de la butée inférieure 31, lorsque la pale, 7*a*, n'est plus soumise à une force centrifuge suffisante pour compenser son poids. Aux vitesses élevées du rotor, par contre, la butée, 31, est escamotée par l'action de la force centrifuge, agissant à l'encontre du ressort 32. Le roulement à billes, 34, lorsqu'il est interposé entre l'appendice, 33, et la butée inférieure 31, facilite les variations du pas de la pale, 7*a*, correspondante, à l'arrêt du rotor, en réduisant le frottement au niveau de ladite butée 31. Une butée supérieure identique peut être montée à l'extrémité du bras radial supérieur 5*a*; elle ne'est cependant nécessaire que pour les démarrages du rotor par grand vent, en particulier sur les plateformes marines.

En vol normal de l'hélicoptère, le rotor illustré sur les figures 4 et 5, et précédemment décrit, fonctionne de la façon suivante:

Les efforts centrifuges dus à la rotation de la pale 7*a* sont transmis par son emplanture aux plaques rigides 8 et 9, par l'intermédiaire des broches 10 et 11, puis à l'armature 17*a* de la butée lamifiée sphérique 17 et enfin à son armature 17*b*. Celle-ci étant fixée rigidement aux bras radiaux 5*a* et 6*a*, elle encaisse directement ces efforts, qui s'équilibrent dans le moyeu 1 avec les efforts centrifuges correspondant aux autres pales.

Les mouvements de battement de chaque pale telle que 7*a* (dans le plan de la figure 4) ainsi que ses mouvements de traînée (dans le plan de la figure 5) sont autorisés par des déformations élastiques, dans les mêmes plans, des calottes en élastomère de la butée sphérique 17, les deux axes, sensiblement perpendiculaires l'un à l'autre, de ces deux mouvements, respectivement de battement et de traînée, se croisant exactement au centre géométrique C de la butée sphérique 17.

Les mouvements angulaires de battement de chaque pale autour du centre C de la butée sphérique sont libres. Par contre, les mouvements angulaires de traînée de chaque pale sont entravés par l'étrier 24, et leurs oscillations sont filtrées par l'amortisseur visco-élastique 20, disposé entre les plaques rigides 8 et 9 et l'étrier 24. Par suite du cisaillement de ses couches d'élastomère 20*c*, l'amortisseur 20 provoque un rappel élastique énergique en traînée de la pale correspondante et assure simultanément un amortissement des mouvements ou oscillations correspondants.

Une modification du pas de la pale, 7*a*, est commandée par exemple de la façon suivante: un pivotement du plateau cyclique 30, commandé à partir de la cabine de pilotage de l'hélicoptère, a pour effet d'exercer par exemple une poussée ascendante sur l'extrémité inférieure de la biellette, 29, correspondante; l'extrémité supérieure de cette dernière exerce alors une poussée ascendante sur l'organe latéral de liaison, 24*d* de la pièce en forme d'étrier 24 (figure 5); il en résulte un pivotement de ladite pièce 24 autour de l'axe de son appendice médian, 24*c*, et de la rotule correspondante, 26*a*, ce pivotement étant transmis par les branches 24*a* et 24*b* de l'étrier 24, ainsi que par les tourillons, 22*a* et 22*b*, à l'amortisseur, 20, dont les couches d'élastomère 20*c* travaillent alors à la compression et au pied de la pale 7*a*, qui pivote de ce fait autour de son axe longitudinal. Comme les axes A et B des tourillons, 22*a* et 22*b*, passent par le centre géométrique C de la butée sphérique 17, il n'y a aucun couplage mécanique entre les changements de pas de la pale d'une part, et ses mouvements de battement autour d'un axe passant par le centre C, d'autre part. Si un couplage entre les mouvements de battement et les changements de pas était par contre souhaité, il faudrait que le centre géométrique C de la butée sphérique 17 ne se trouve pas sur les axes A et B des tourillons 22*a* et 22*b*.

Les avantages, précédemment indiqués, du rotor de giravion selon la présente invention résultent en particulier des considérations suivantes:

Pour une distance déterminée entre le centre C de la rotule sphérique, 17, associée à chaque pale, 7*a*, et la rotule, 26*a* (distance d'encastrement de la pale correspondante), la disposition de ladite rotule, 26*a*, à l'intérieur du moyeu tubulaire 1, c'est-à-dire à proximité immédiate de l'axe géométrique du rotor, permet de rapprocher dudit moyeu le pied, 7*a*, de la pale. Les biellettes, 29, de commande du pas peuvent être également rapprochées du mât du rotor par suite de l'absence de couplage entre les mouvements de battement et les changements du pas des pales. L'intégration de l'amortisseur visco-élastique 20, à la chape 8—9 permet d'obtenir une réduction du maître-couple du pied de la pale et de la chape, en particulier lorsqu'un pas important est donné à ladite pale.

Selon une autre caractéristique avantageuse de la forme de réalisation, précédemment décrite, de l'invention, une pièce, 35, est fixée par des vis telles que, 36, sur la face de l'armature, 17b, de la butée sphérique, 17, qui est tournée vers le pied de la pale 7a; des évidements presque semi-circulaires, et complémentaires, 37a et 37b, sont aménagés d'une part dans la pièce 35, notamment dans deux brides, supérieure et inférieure, se détachant de cette pièce 35, ainsi que dans les bords les plus voisins des ouvertures, 8a et 9a, des plaques rigides 8 et 9 respectivement. Lorsque le rotor est au repos, la broche amovible, 11, peut être séparée du pied de la pale, 7a, correspondante et engagée dans les évidements complémentaires, 37a et 37b, comme on l'a indiqué en traits mixtes sur la figure 4; la broche amovible 11, dans cette position, immobilise alors la butée sphérique, 17, et notamment son armature, 17b, par rapport aux plaques rigides, 8 et 9, de la chape. Celle-ci étant par suite pratiquement immobilisée par rapport au moyeu 1 du rotor, il est possible de replier la pale, 7a, vers l'arrière de l'hélicoptère en la faisant pivoter autour de sa broche inamovible 10, restée en place.

La présente invention n'est pas limitée à la forme de réalisation précédemment décrite. Le carénage, 4b, est facultatif; par contre, le moyeu, 1, du rotor lui-même peut être pourvu d'un carénage approprié. L'amortisseur visco-élastique lui-même est susceptible de formes de réalisation différentes. Il n'est pas indispensable qu'il soit en forme de couronne plate, et inséré entre les deux plaques rigides de la chape, de manière à entourer la butée sphérique; il suffit, dans le cadre de l'invention, qu'il soit disposé entre la chape associée à chaque pale et le dispositif de commande du pas de la pale correspondante. Le moyeu 1, du rotor peut être métallique et d'une seule pièce avec le mât 1a du rotor. A titre de variante, le moyeu, 1, du rotor peut aussi être constitué, de façon connue en soi, en un matériau stratifié, et être fixé, par exemple par boulonnage, sur le sommet du mât 1a.

**Revendications**

1. Rotor de giravion à moyeu articulé compact, dont le moyeu (1) est réuni à chaque pale (7a) par l'intermédiaire d'une chape formée essentiellement par deux plaques rigides (8, 9) enserrant le pied de la pale, et d'une butée lamifiée sphérique (17), fixée vers son centre (C) à au moins un bras radial (5a, 6a) du moyeu et prenant appui, du côté de sa convexité, contre l'extrémité intérieure de la chape, le pas de chaque pale étant commandé par un organe de commande (24) relié à une biellette de commande du pas (29) par l'intermédiaire d'un organe de liaison (24d), caractérisé en ce que, pour chaque pale (7a), un amortisseur visco-élastique (20), constitué par un empilement alterné d'au moins deux flasques métalliques (20a, 20b) et d'au moins une couche (20c) fixée aux flasques par vulcanisation ou collage, d'un matériau visco-élastique à grande raideur et à rémanence élevée pour les déformations, est disposé entre la chape (8, 9) correspondante et l'organe de commande (24) du pas correspondant, ce dernier étant d'une part monté pivotant par au moins une partie radiale externe sur la chape par l'intermédiaire dudit amortisseur (20) et d'autre part monté coulissant et pivotant autour de l'axe longitudinal de la pale correspondante à l'intérieur ou à proximité immédiate du corps de moyeu (1), par une partie radiale interne qui est solidaire de l'organe de liaison (24d) très proche du corps de moyeu (1), la direction du coulissement étant celle de l'axe longitudinal de la pale (7a) correspondante et perpendiculaire à l'axe de pivotement de l'organe de commande du pas (24) sur la chape (8, 9).

2. Rotor selon la revendication 1, caractérisé en ce que l'amortisseur visco-élastique (20), en forme de couronne plate, est inséré entre les deux plaques rigides (8, 9) de la chape, de manière à entourer la butée lamifiée sphérique (17), et de telle sorte que le centre (C) de ladite butée sphérique et le centre de ladite couronne plate soient pratiquement confondus.

3. Rotor selon l'une quelconque des revendications 1 et 2, caractérisé en ce que des paliers d'articulation (21a, 22a, 21b, 22b) solidaires de l'amortisseur visco-élastique (20) sont insérés entre la chape (8, 9) associée à chaque pale (7a) et l'organe de commande du pas (24) de la pale correspondante.

4. Rotor selon la revendication 3, caractérisé en ce que les axes (A, B) des paliers d'articulation (21a, 22a, 21b, 22b) d'une même chape (8, 9) sont alignés et passent par le centre (C) de la butée sphérique (17) correspondante.

5. Rotor selon la revendication 3, caractérisé en ce que le centre (C) de chaque butée lamifiée sphérique (17) est situé en dehors des axes (A, B) des deux paliers (21a, 22a, 21b, 22b) d'articulation de la chape (8, 9) correspondante de façon à produire une conjugaison des mouvements de battement et d'incidence de la pale (7a) correspondante.

6. Rotor selon l'une quelconque des revendications 3 à 5, caractérisé en ce que l'organe de commande du pas (24) de chaque pale (7a) a la forme d'un étrier dont les deux branches (24a et 24b) en position radiale externe, sont montées respectivement pivotantes dans les deux paliers d'articulation (21a, 22a, 21b, 22b) de la chape (8, 9) correspondante et la partie radiale interne de l'étrier, située près du corps de moyeu (1) est munie, en son milieu, d'un appendice (24c) monté à rotule coulissante (26a) à l'intérieur ou à proximité immédiate du corps de moyeu (1), ainsi que, sur un côté, de l'organe de liaison (24d) relié à la biellette de commande (29), de préférence sensiblement parallèle à l'axe du moyeu (1) et disposée à proximité immédiate du mât (1a) du rotor.

7. Rotor selon l'une quelconque des revendications 1 à 6, caractérisé en ce que le pied de chaque pale (7a) est réuni à la chape (8, 9) correspondante par deux broches (10, 11), dont une amovible (11), et qu'un logement (37b) est aménagé dans ladite chape pour y insérer ladite broche amovible (11), afin d'immobiliser la butée sphérique (17) par rapport à la chape lors du repliement de la pale vers l'arrière du giravion, par pivotement de la pale autour de la broche inamovible (10) correspondante.

**Patentansprüche**

1. Rotor für einen Hubschrauber mit kompakter, gelenkiger Nabe, welche Nabe (1) mit jedem Blatt (7a) durch ein im wesentlichen durch zwei feste, die Blattwurzel enthaltende starren Platten (8, 9) gebildetes Gagelstück und durch ein kugelförmiges, geschichtetes Widerlager (17) verbunden ist, welches Widerlager (17) nahe seinem Mittelpunkt (C) an mindestens einem radialen Arm (5a, 6a) der Nabe befestigt ist und auf seiner konvexen Seite gegen das innere Ende des Gabelstücks abgestützt wird, wobei die Blattsteigung eines jeden Blattes durch ein Steuerelement (24) betätigt wird, das mit einer Blattsteigungssteuerstange (29) durch ein Zwischenglied (24d) verbunden ist, dadurch gekennzeichnet, daß für jedes Blatt (7a) ein visko-elastischer Dämpfer (20) vorgesehen ist, der durch eine abwechselnde Beschichtung aus mindestens zwei Metallplatten (20a, 20b) und mindestens einer Schicht (20c) besteht, die durch Vulkanisierung oder Kleben an den Platten befestigt ist, und aus visko-elastischem Material von größer Steifigkeit und hohem Remanenz für die Verformungen besteht, welcher Dämpfer zwischen dem entsprechenden Gabelstück (8, 9) und dem entsprechenden Blattsteigungssteuerelement (24) angebracht ist, wobei das Steuerelement (24), einerseits, drehbar durch mindestens einen äußeren radialen Teil an dem Gabelstück unter Zwischenschaltung des genannten Dämpfers (20), und andererseits, gleitbar und drehbar um die Längsachse des entsprechenden Blattes an der Innenseite oder in der direkten Nähe des Nabenkörpers (1) durch einen inneren radialen Teil, angebracht ist, wobei dieser innere Teil integral mit dem nahe dem Nabenkörper (1) befindlichen Zwischenglied (24d) ist, und wobei die Gleitrichtung die der Längsachse des entsprechenden Blattes (7a) und die senkrecht zu der Drehachse des Blattsteigungssteuerelements (24) an dem Gabelstück (8, 9) ist.

2. Rotor gemäß Anspruch 1, dadurch gekennzeichnet, daß der visko-elastische Dämpfer (20), der die Form einer flachen Krone hat, zwischen die beiden starren Platten (8, 9) des Gabelstückes so eingesetzt ist, daß er das kugelförmige geschichtete Widerlager (17) umfaßt, und daß der Mittelpunkt des genannten kugelförmigen Widerlagers und der Mittelpunkt der genannten flachen Krone praktisch gleich sind.

3. Rotor gemäß einem der Ansprüche 1 und 2, dadurch gekennzeichnet, daß Gelenklager (21a, 22a, 21b, 22b), welche integral mit dem visko-elastischen Dämpfer (20) sind,. zwischen dem mit jedem Blatt (7a) assoziierten Gabelstück (8, 9) und dem Blattsteigungssteuerelement (24) des entsprechenden Blattes eingesetzt sind.

4. Rotor gemäß Anspruch 3, dadurch gekennzeichnet, daß die Achsen (A, B) der Gelenklager (21a, 22a, 21b, 22b) desselben Gabelstücks (8, 9) miteinander ausgerichtet sind und durch den Mittelpunkt (C) des kugelförmigen geschichteten Widerlagers (17) gehen.

5. Rotor gemäß Anspruch 3, dadurch gekennzeichnet, daß ein jeder Mittelpunkt (C) eines jeden kugelförmigen geschichteten Widerlagers (17) außerhalb der Achsen (A, B) de zwei entsprechenden Gelenklager (21a, 22a, 21b, 22b) des Gabelstücks (8, 9) so gelegen ist, daß eine Vereinigung der schwingenden Bewegungen und des Anstellwinkels des entsprechenden Blattes (7a) bewirkt wird.

6. Rotor gemäß einem der Ansprüche 3 bis 5, dadurch gekennzeichnet, daß das Blattsteigungssteuerelement (24) eines jeden Blattes (7a) die Form eines U-Teils hat, dessen zwei freie Schenkel (24a, 24b) in äußerer radialer Lage drehbar in den beiden Gelenklagern (21a, 22a, 21b, 22b) des entsprechenden Gabelstücks (8, 9) angebracht sind, und das innere radiale Stück des U-Teils, das nahe dem Nabenkörper (1) gelegen ist, in seiner Mitte mit einem in gleitender Kugelgelenkform (26a) innerhalb oder in der unmittelbaren Nähe des Nabenkörpers (1) angebrachten Fortsatz (24c), sowie auf einer Seite mit einem Zwischenglied (24d) versehen ist, welches Zwischenglied mit der Steuerstange (29) verbunden ist, die vorzugsweise im wesentlichen parallel zu der Achse der Nabe (1) und in unmittelbar naher anordnung an dem Rotormast (1a) liegt.

7. Rotor gemäß einem der Ansprüche 1 bis 6, dadurch gekennzeichnet, daß die Wurzel eines jeden Blattes (7a) an dem entsprechenden Gabelstück (8, 9) mit Hilfe von zwei Bolzen (10, 11) angebracht ist, wovon der eine (11) abnehmbar ist, und ein Lagersitz (37b) in dem genannten Gabelstück vorgesehen ist, um darin den genannten abnehmbaren Bolzen (11) einsetzen zu können, damit das kugelförmige Widerlager (17) im Verhältnis zu dem Gabelstück bewegungsunfähig gemacht werden kann, wenn das Blatt nach der Rückseite des Hubschraubers durch Drehen des Blattes um den entsprechenden nicht-abnehmbaren Bolzen (10) gelegt wird.

**Claims**

1. Gyroplane rotor with a compact articulated hub, which hub (1) is connected to each blade (7a) by means of a yoke formed substantially by two rigid plates (8, 9), containing the blade root and of a spherical laminated abutment (17), fixed near its center (C) to at least one radial arm (5a, 6a) of the hub and being supported, on its convex side, against the inner end of the yoke with the pitch of each blade being controlled by a control element (24), connected to a pitch control rod (29) by means of an intermediate link (24d), characterized in that for each blade (7a) a visco-elastic absorber (20), formed of an alternating stack of at least two metal plates (20a, 20b) and at least one layer (20c), attached to the plates by vulcanization of gluing, of a visco-elastic matérial of great stiffness and high remanence to deformation, is provided between the corresponding yoke (8, 9), and the corresponding pitch control element, the latter being, on the one hand, pivotally mounted by at least one outer radial portion on the yoke by means of said absorber (20) and, on the other hand, slidingly and pivotally mounted around the longitudinal axis of the corresponding blade, at the inside or in the direct proximity of the hub body (1), by an internal radial portion which is integral with the link (24d) very close to the hub body (1), and the direction of sliding being that of the longitudinal axis of the corresponding blade (7a), and perpendicular to the pivoting axis of the pitch control element (24) on the yoke (8, 9).

2. Rotor according to claim 1, characterized in that the visco-elastic absorber (20), in form of a flat crown, is inserted between the two rigid plates (8, 9) of the yoke in such a manner as to surround the spherical laminated abutment (17), and in that the center (C) of said spherical abutment and the center of said flat crown are practically the same.

3. Rotor according to any of claims 1 and 2, characterized in that articulating bearings (21a, 22a, 21b, 22b) which are integral with the visco-elastic absorber (20), are inserted between the yoke (8, 9) associated with each blade (7a) and the pitch control element (24) of the corresponding blade.

4. Rotor according to claim 3, characterized in that the axes (A, B) of the articulating bearings (21a, 22a, 21b, 22b) of the same yoke (8, 9) are in line and extend through the center (C) of the spherical laminated abutment (17).

5. Rotor according to claim 3, characterized in that the center (C) of each spherical laminated abutment (17) is positioned outside of the axes (A, B) of the two corresponding articulating bearings (21a, 22a, 21b, 22b) of the corresponding yoke (8, 9) so as to produce conjugated flap and pitch motion of the corresponding blade (7a).

6. Rotor according to any one of claims 3 to 5, characterized in that the pitch control element (24) of each blade (7a) has the form of a U-piece whose two branches (24a and 24b) in outer radial position are, respectively, pivotally mounted in the two articulating bearings (21a, 22a, 21b, 22b) of the corresponding yoke (8, 9), and in the inner radial portion of the U-piece, situated close to the hub body (1), is provided, in its center, with a projection (24c), mounted in gliding ball and socket style (26a) inside or very close to the hub body (1) as well as, on one side, with the link (24d), connected to the control rod (29), preferably being substantially parallel to the axis of the hub (1) and arranged very close to the rotor strut (1a).

7. Rotor according to any one of claims 1 to 6, characterized in that the root of each blade (7a) is joined to the corresponding yoke (8, 9) by two pins (10, 11), one of which (11) is removable, and a seat (37b) is provided in said yoke for inserting therein said removable pin (11) so as to immobilize the spherical abutment (17) with respect to the yoke when the blade is folded toward the rear of the gyroplane, by pivoting of the blade around the corresponding non-removable pin (10).

_Fig. 1_

_Fig. 2_

_Fig. 3_

0 021 901

_Fig.4_

0021901

_Fig.5_